# EUROPEAN PATENT SPECIFICATION

(11) **EP 4 173 908 B1**
(45) Date of publication and mention of the grant of the patent: **10.04.2024**
(21) Application number: 21802583.1
(22) Date of filing: 30.09.2021
(51) Int. Cl.: B61H 11/10, B60T 13/26, B60T 17/06

(54) **AUXILIARY RESERVOIR AIR CHARGE SYSTEM AND EXPRESS FREIGHT TRAIN AIR BRAKE SYSTEM**
HILFSLUFTZYLINDERAUFBLASSYSTEM UND LUFTBREMSSYSTEM FÜR EINEN EXPRESSFRACHTZUG
SYSTÈME DE CHARGE D'AIR DE RÉSERVOIR AUXILIAIRE ET SYSTÈME DE FREIN À AIR DE TRAIN DE FRET EXPRESS

(30) Priority: 14.09.2021 CN 202111072096
(43) Date of publication of application: 03.05.2023
(73) Proprietor: Meishan CRRC Brake Science & Technology Co., Ltd., Meishan, Sichuan 620010 (CN)
(72) Inventor: XIAO, Weiyuan, Meishan City, Sichuan 620010 (CN); XIAO, Chen, Meishan City, Sichuan 620010 (CN); LIU, Yi, Meishan City, Sichuan 620010 (CN); SHEN, Yanfei, Meishan City, Sichuan 620010 (CN); YANG, Jianping, Meishan City, Sichuan 620010 (CN); LI, Jing, Meishan City, Sichuan 620010 (CN); SONG, Zhiyong, Meishan City, Sichuan 620010 (CN); WANG, Kaien, Meishan City, Sichuan 620010 (CN); TANG, Qi, Meishan City, Sichuan 620010 (CN)
(74) Representative: Fioravanti, Corrado
(86) International application number: PCT/CN2021/122241
(87) International publication number: WO 2023/039957

(56) References cited:
- CN-A- 105 905 088
- CN-A- 105 905 088
- CN-A- 108 025 722
- CN-A- 111 688 657
- CN-A- 111 873 970
- CN-U- 211 592 575
- GB-A- 609 709
- GB-A- 609 709
- GB-A- 991 699

## Description

### Cross-Reference to Related Application

The present invention claims priority of Chinese patent application with the filing number 202111072096.9 filed on September 14, 2021 with the Chinese Patent Office, and entitled "Auxiliary Air Cylinder Inflation System and Air Brake System for Express Freight Train".

### Technical Field

The present invention relates to the field of air brake systems, in particular to an auxiliary air cylinder inflation system and an air brake system for an express freight train.

### Background Art

The auxiliary air cylinder, which is a component of the rail vehicle brake system, is used to store pressure air, and is used as an air source to fill the pressure air into the brake cylinder through the distribution valve during braking conditions to produce a braking effect.

At present, the initial inflation rate of the auxiliary air cylinder is completely determined by the inflation rate of a control air cylinder. When the brake system is initially inflated, the pressure air of the train pipe passes through inflation air path of the control air cylinder, and then enters inflation air path of the auxiliary air cylinder, therefore, the inflation time of auxiliary air cylinder is completely determined by the inflation time of the control air cylinder.

As the railway systems of various countries in the world have different requirements for the inflation time of the auxiliary air cylinder, some countries require that the inflation time of auxiliary air cylinder is shorter than the inflation time of the control air cylinder. Therefore, the existing inflation air path of auxiliary air cylinder cannot fully meet the international demands.

GB 609 709 A discloses a compressed air-operated railway brake in which the process of applying and releasing the brake is regulated by varying the pressure in the brake pipe.

### Summary

The present invention provides an auxiliary air cylinder inflation system, which can alleviate the problem that the air inflation of the auxiliary air cylinder is subject to the air inflation of the control air cylinder.

The present invention also provides an air brake system for an express freight train, which can alleviate the problem that the air inflation of the auxiliary air cylinder is subject to the air inflation of the control air cylinder.

The embodiments of the present invention can be implemented as follows:
the embodiment of the present invention provides an auxiliary air cylinder inflation system, which may include a control air cylinder inflation valve, a control air cylinder, an auxiliary air cylinder inflation valve, a first passage and a second passage;
the control air cylinder inflation valve may be provided with a train pipe air outlet, and the control air cylinder may be provided with a first train pipe inflation port, and the auxiliary air cylinder inflation valve may be provided with a second train pipe inflation port; and
the first passage may communicate with the train pipe air outlet and the first train pipe inflation port, and the second passage may communicate with the train pipe air outlet and the second train pipe inflation port; and the first passage may be connected in parallel with the second passage.

In addition, the auxiliary air cylinder inflation system provided by the embodiment of the present invention may also be provided to have the following additional technical features:
optionally, the auxiliary air cylinder inflation system may further comprise a shrinkage plug, and the shrinkage plug may be arranged on the first passage.

Optionally, the control air cylinder inflation valve may comprise a valve seat, a limiting valve body and a control cylinder inflation valve body, both the limiting valve body and the control cylinder inflation valve body may be arranged in the valve seat, and the limiting valve body may move relative to the control cylinder inflation valve body; the valve seat may be provided with a first train pipe air inlet and the train pipe air outlet; and the limiting valve body may be provided with a first hole communicating with the first train pipe air inlet, the control cylinder inflation valve body may be provided with a second hole communicating with the train pipe air outlet; the first hole may always be in communication with the second hole, the ventilation section of the first hole may be smaller than the ventilation section of the second hole;
the limiting valve body may be used to be attached to the control cylinder inflation valve body when moving to a first preset position relative to the control cylinder inflation valve body, so as to block the first train pipe air inlet and the second hole; or the limiting valve body may be used to make a first gap formed between the limiting valve body and the control cylinder inflation valve body when moving to a second preset position relative to the control cylinder inflation valve body, and the first gap may be used to communicate with the first train pipe air inlet and the second hole.

Optionally, one side of the limiting valve body close to the control cylinder inflation valve body may be provided with a first gluey valve, and the first gluey valve may be used to be attached to the control cylinder inflation valve body.

Optionally, the auxiliary air cylinder inflation system may further comprise a limiting spring, the limiting spring may be arranged between the valve seat and the limiting valve body, and the limiting spring may be used to make the limiting valve body have a movement tendency of moving to the first preset position; and
the first train pipe air inlet may be used to make the limiting valve body have, after inflating, a movement tendency of moving to the second present position.

Optionally, the valve seat may also be provided with a second train pipe air inlet; the second train pipe air inlet and the first train pipe air inlet may be located at the two opposite ends of the limiting valve body, the second train pipe air inlet may be used to enable, after inflating, the limiting spring to push the limiting valve body to move to the first preset position.

Optionally, the auxiliary air cylinder inflation system may further comprise a valve rod movably arranged in the valve seat, and the valve rod and the limiting valve body may be arranged on two opposite sides of the control cylinder inflation valve body; the valve rod may be used to be attached to the control cylinder inflation valve body when moving to a third preset position, so as to block the second hole and the train pipe air outlet, or the valve rod may be used to enable a second gap to be formed between the valve rod and the control cylinder inflation valve body when moving to the fourth preset position, and the second gap may be used to communicate with the second hole and the train pipe air outlet.

Optionally, one side of the valve rod close to the control cylinder inflation valve body may be provided with a second gluey valve, and the second gluey valve may be used to be attached to the control cylinder inflation valve body.

Optionally, the auxiliary air cylinder inflation system may also comprise control cylinder valve spring, and the control cylinder valve spring may be arranged between the control cylinder inflation valve body and the valve rod, and the control cylinder valve spring may be used to make the valve rod have a movement tendency of moving to the fourth preset position.

Optionally, the valve seat may be provided with a pre-controlled pressure inlet, and the pre-controlled pressure inlet may be used to make the valve rod have a movement tendency of moving to the third preset position after inflating.

Optionally, the auxiliary air cylinder inflation system may further comprise a control cylinder inflation valve cover, a flat plate piston and a cut-off membrane plate, and the valve rod may simultaneously penetrate through the control cylinder inflation valve cover and the flat plate piston.

Optionally, two ends of the second hole may respectively face the limiting valve body and the control cylinder inflation valve body, and one end of the second hole that may face the control cylinder inflation valve body may be arranged as a bell mouth.

The embodiment of the present invention also provides an air brake system for an express freight train. The air brake system for an express freight train may comprise an auxiliary air cylinder inflation system.

The beneficial effects of the auxiliary air cylinder inflation system and the air brake system for an express freight train in the embodiments of the present invention at least comprise, for example:
the auxiliary air cylinder inflation system may comprise a control air cylinder inflation valve, a control air cylinder, an auxiliary air cylinder inflation valve, a first passage and a second passage; the control air cylinder inflation valve may be provided with a train pipe air outlet, and the control air cylinder may be provided with a first train pipe inflation port, and the auxiliary air cylinder inflation valve may be provided with a second train pipe inflation port; and the first passage may communicate with the train pipe air outlet and the first train pipe inflation port, and the second passage may communicate with the train pipe air outlet and the second train pipe inflation port; and the first passage may be connected in parallel with the second passage.

Both the control air cylinder and auxiliary air cylinder inflation valve may be located downstream of the control air cylinder inflation valve, and the control air cylinder and the auxiliary air cylinder inflation valve may be arranged in parallel, the control air cylinder inflation valve can simultaneously inflate the control air cylinder and auxiliary air cylinder inflation valve through the first passage and the second passage; the auxiliary air cylinder inflation valve enables inflation of the auxiliary air cylinder, the inflation of the auxiliary air cylinder and the control air cylinder can be carried out separately and independently, which is not restricted by the control air cylinder inflation and improves the problem that the inflation time of auxiliary air cylinder is subject to the inflation time of control air cylinder.

The air brake system for an express freight train may comprise the above-mentioned auxiliary air cylinder inflation system, which can improve the problem that the inflation time of auxiliary air cylinder is subject to the inflation time of control air cylinder.

### Brief Description of Drawings

In order to illustrate the technical solutions of the embodiments of the present invention more clearly, the drawings need to be used in the embodiments will be briefly introduced below, it should be understood that the following drawings only show some embodiments of the present invention and therefore should not be regarded as a limitation of the scope, and for those ordinarily skilled in the art, other relevant drawings can also be obtained in light of these drawings, without using any inventive efforts.
FIG.1 is a structural schematic view of an auxiliary air cylinder inflation system provided by an embodiment of the present invention; and
FIG.2 is an internal structure schematic view of a control air cylinder inflation valve in the auxiliary air cylinder inflation system provided by an embodiment of the present invention.

Reference signs: 10- auxiliary air cylinder inflation system; 100- control air cylinder inflation valve; 110- valve seat; 111- first train pipe air inlet; 112-first chamber; 113- second train pipe air inlet; 114- train pipe air outlet; 115-second chamber; 116-third chamber; 120- limiting valve body; 121- first gluey valve; 130- control cylinder inflation valve body; 140- valve rod; 141- second gluey valve; 150- control cylinder inflation valve cover; 160- flat plate piston; 170- cut-off membrane plate; 180- limiting spring; 190- control cylinder valve spring; 200- control air cylinder; 210-first train pipe inflation port; 220-shrinkage plug; 300- auxiliary air cylinder inflation valve; 310- second train pipe inflation port; 400- auxiliary air cylinder; 500- first passage; 600- second passage.

### Detailed Description of Embodiments

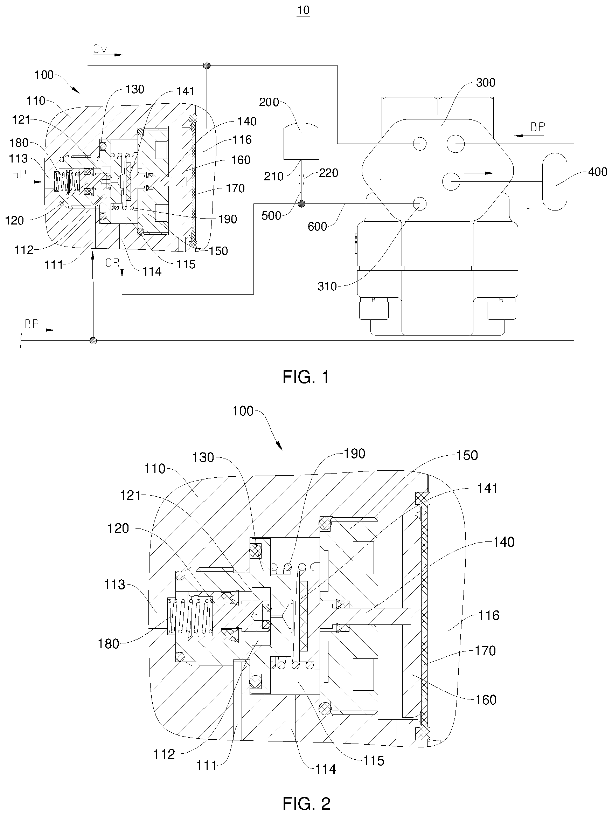

The auxiliary air cylinder inflation system 10 provided by the present embodiment will be described in detail below with reference to FIG. 1 to FIG.2.

FIG.1 of the present embodiment provides an auxiliary air cylinder inflation system 10, and the auxiliary air cylinder inflation system 10 provided in the embodiment of the present invention may comprise a control air cylinder inflation valve 100, a control air cylinder 200, an auxiliary air cylinder inflation valve 300, a first passage 500 and a second passage 600; the control air cylinder inflation valve 100 may be provided with a train pipe air outlet 114, and the control air cylinder 200 may be provided with a first train pipe inflation port 210, and the auxiliary air cylinder inflation valve 300 may be provided with a second train pipe inflation port 310; and the first passage 500 may communicate with the train pipe air outlet 114 and the first train pipe inflation port 210, and the second passage 600 may communicate with the train pipe air outlet 114 and the second train pipe inflation port 310; and the first passage 500 may be connected in parallel with the second passage 600.

Both the control air cylinder 200 and the auxiliary air cylinder inflation valve 300 may be located downstream of the control air cylinder inflation valve 100, the control air cylinder 200 and the auxiliary air cylinder inflation valve 300 may be connected in parallel, the auxiliary air cylinder inflation valve 300 may be used to inflate the auxiliary air cylinder 400.

The control air cylinder inflation valve 100 can be communicated with the train pipe, and the pressure air of the train pipe may be simultaneously inflated to first train pipe inflation port 210 and second train pipe inflation port 310 through the train pipe air outlet 114 of the control air cylinder inflation valve 100, that is, the control air cylinder 200 and the auxiliary air cylinder inflation valve 300 are inflated simultaneously, and then the auxiliary air cylinder inflation valve 300 inflates the auxiliary air cylinder 400. The auxiliary air cylinder inflation valve 300 and the control air cylinder 200 may be separately and independently inflated, which is not restricted by the inflation of the control air cylinder 200.

Continuing to refer to FIG.1, in the present embodiment, the auxiliary air cylinder inflation system 10 may further comprise a shrinkage plug 220, and the shrinkage plug 220 may be arranged on the first passage 500.

The shrinkage plug 220 can limit the inflation speed of the control air cylinder 200. When the diameter of the shrinkage plug 220 is 0.4mm~0.45mm, the time for the pressure of the control air cylinder 200 to rise from 0kPa to 480kPa can be controlled to be 150s~210s.

Referring to FIG.2, in the present embodiment, the control air cylinder inflation valve 100 comprises a valve seat 110, a limiting valve body 120 and a control cylinder inflation valve body 130, both the limiting valve body 120 and the control cylinder inflation valve body 130 are arranged in the valve seat 110, and the limiting valve body 120 may move relative to the control cylinder inflation valve body 130; the valve seat 110 may be provided with a first train pipe air inlet 111 and the train pipe air outlet 114; and the limiting valve body 120 may be provided with a first hole communicating with the first train pipe air inlet 111, the control cylinder inflation valve body 130 may be provided with a second hole communicating with the train pipe air outlet 114; the first hole may be always in communication with the second hole, the ventilation section of the first hole may be smaller than the ventilation section of the second hole; the limiting valve body 120 may be used to be attached to the control cylinder inflation valve body 130 when moving to a first preset position relative to the control cylinder inflation valve body 130, so as to block the first train pipe air inlet 111 and the second hole; or the limiting valve body 120 may be used to enable a first gap to be formed between the limiting valve body and the control cylinder inflation valve body 130 when moving to a second preset position relative to the control cylinder inflation valve body 130, the first gap may be used to communicate with the first train pipe air inlet 111 and the second hole.

The "ventilation section" refers to the area through which air can circulate. In the present invention, the ventilation section of the first hole is the cross section of the first hole. When the first hole and the second hole are regular circular holes, the ventilation section of the first hole may be smaller than the ventilation section of the second hole, which is equivalent to that the hole diameter of the first hole may be smaller than the hole diameter of the second hole.

The limiting valve body 120 may be movably arranged in the valve seat 110, and the limiting valve body 120 may be close to or away from the control cylinder inflation valve body 130 during the movement. In the process of the limiting valve body 120 moving close to the control cylinder inflation valve body 130, when moving to the first preset position, the limiting valve body 120 may be attached to the control cylinder inflation valve body 130, at this time, the first train pipe air inlet 111 is blocked from the second hole, the pressure air may be inflated through the first train pipe air inlet 111, the first hole, the second hole and the train pipe air outlet 114 in sequence. In the process of the limiting valve body 120 moving away from the control cylinder inflation valve body 130, when moving to the second preset position, a first gap may be formed between the limiting valve body 120 and the control cylinder inflation valve body 130, and the first train pipe air inlet 111 communicates with the second hole, at this time, both the first hole and the second hole are communicated with the first train pipe air inlet 111, however, as the ventilation section of the second hole is larger than the ventilation section of the first hole, BP pressure air may choose to flow out through the first train pipe air inlet 111, the second hole and the train pipe air outlet 114 in sequence, for inflating.

Specifically, a first gluey valve 121 may be provided on one side of the limiting valve body 120 close to the control cylinder inflation valve body 130, and the first gluey valve 121 may be used to be attached to the control cylinder inflation valve body 130 to seal the first gap between the limiting valve body 120 and the control cylinder inflation valve body 130 and block the second hole and the first train pipe air inlet 111 at the same time.

Referring to FIG. 2, in the present embodiment, the auxiliary air cylinder inflation system 10 further comprises a limiting spring 180, the limiting spring 180 may be arranged between the valve seat 110 and the limiting valve body 120, and the limiting spring 180 may be used to make the limiting valve body 120 have a movement tendency of moving to the first preset position; the first train pipe air inlet 111 may be used to make the limiting valve body 120 have a movement tendency of moving to the second present position after inflating. Specifically, the limiting spring 180 may be located between one end of the limiting valve body 120 away from the control cylinder inflation valve body 130 and the valve seat 110.

In the initial state, the limiting valve body 120 may be abutted against and attached to the control cylinder inflation valve body 130 under the action of the limiting spring 180. Air enters from the first train pipe air inlet 111 to push the limiting valve body 120 to compress the limiting spring 180, so that the limiting valve body 120 is away from the control cylinder inflation valve body 130 to form a first gap between the limiting valve body 120 and the control cylinder inflation valve body 130.

Specifically, a first chamber 112 may be formed between the first train pipe air inlet 111 and the limiting valve body 120, both first hole and the first gap may be communicated with the first chamber 112; and the first chamber 112 may be used to make the limiting valve body 120 have a movement tendency of moving to the second preset position after inflating; after air enters from the first train pipe air inlet 111, the gas pressure in the first chamber 112 gradually rises until the limiting valve body 120 is pushed to compress the limiting spring 180 to move.

Referring to FIG. 2, in the present embodiment, the valve seat 110 may be further provided with a second train pipe air inlet 113; the second train pipe air inlet 113 and the first train pipe air inlet 111 are located at the two opposite ends of the limiting valve body 120, the second train pipe air inlet 113 may be used to enable the limiting spring 180 to push the limiting valve body 120 to move to the first preset position, after inflating.

Air enters from the second train pipe air inlet 113, and the pressure at one end of the limiting valve body 120 away from the first train pipe air inlet 111 rises, the limiting valve body 120 again approaches the control cylinder inflation valve body 130 under the action of the limiting spring 180, and is attached to the control cylinder inflation valve body 130.

Referring to FIG. 2, in the present embodiment, the auxiliary air cylinder inflation system 10 may further comprise a valve rod 140 movably arranged in the valve seat 110, and the valve rod 140 and the limiting valve body 120 may be arranged on the two opposite sides of the control cylinder inflation valve body 130; the valve rod 140 may be used to be attached to the control cylinder inflation valve body 130 when moving to the third preset position, so as to block the second hole and the train pipe air outlet 114, or the valve rod 140 may be used to enable a second gap to be formed between the valve rod and the control cylinder inflation valve body 130 when moving to the fourth preset position, and the second gap may be used to communicate with the second hole and the train pipe air outlet 114.

The valve rod 140 may move closer to or away from the control cylinder inflation valve body 130, when the valve rod 140 is close to the control cylinder inflation valve body 130 until the valve rod is attached to the control cylinder inflation valve body 130, the second hole may be blocked from the train pipe air outlet 114, and the train pipe air outlet 114 cannot be used for inflation. When the valve rod 140 is away from the control cylinder inflation valve body 130, a second gap may be formed between the valve rod 140 and the control cylinder inflation valve body 130, the second hole may communicate with the train pipe air outlet 114, at this time, the BP pressure air flowing out from the second hole may be inflated outwards through the train pipe air outlet 114.

Specifically, one side of the valve rod 140 close to the control cylinder inflation valve body 130 may be provided with a second gluey valve 141, and the second gluey valve 141 may be used to be attached to the control cylinder inflation valve body 130 to seal the second gap, thereby blocking the second hole and the train pipe air outlet 114.

Specifically, the valve seat 110 may be provided therein with a second chamber 115 communicating with the train pipe air outlet 114, and the second hole may communicate with the second chamber 115 through the second gap.

Referring to FIG. 2, in the present embodiment, two ends of the second hole respectively may face the limiting valve body 120 and the control cylinder inflation valve body 130, and one end of the second hole facing the control cylinder inflation valve body 130 may be arranged as a bell mouth to improve the air outlet speed.

Referring to FIG. 2, in the present embodiment, the auxiliary air cylinder inflation system 10 further may comprise control cylinder valve spring 190, and the control cylinder valve spring 190 may be arranged between the control cylinder inflation valve body 130 and the valve rod 140, and the control cylinder valve spring 190 may be used to make the valve rod 140 have a movement tendency of moving to the fourth preset position.

In the initial state, the valve rod 140 may be away from the control cylinder inflation valve body 130 under the action of the control cylinder valve spring 190 to form a second gap between the control cylinder inflation valve body 130 and the valve rod 140.

Referring to FIG. 2, in the present embodiment, the valve seat 110 may be provided with a pre-controlled pressure inlet, and the pre-controlled pressure inlet may be used to make the valve rod 140 have a movement tendency of moving to the third preset position after inflating.

Specifically, the valve seat 110 may be provided thereinside with a third chamber 116 communicating with the pre-controlled pressure inlet. When the CV pressure air enters the third chamber 116, the valve rod 140 is pushed to compress the control cylinder valve spring 190 until the valve rod 140 is attached to the control cylinder inflation valve body 130, blocking the circulation of the BP pressure air.

Referring to FIG. 2, in the present embodiment, the auxiliary air cylinder inflation system 10 further may comprise a control cylinder inflation valve cover 150, a flat plate piston 160 and a cut-off membrane plate 170. The relative positions in FIG.2 are introduced, the valve rod 140, the control cylinder inflation valve cover 150, the flat plate piston 160 and the cut-off membrane plate 170 may be provided in sequence from left to right, and the valve rod 140 may simultaneously penetrate through the control cylinder inflation valve cover 150 and the flat plate piston 160, and a third chamber 116 may be formed between the cut-off membrane plate 170 and the valve seat 110.

Referring to FIG. 1 and FIG. 2, according to an auxiliary air cylinder inflation system 10 provided in the present embodiment, the working principle of the auxiliary air cylinder inflation system 10 may comprise:

### (1). initial inflation

A part of BP pressure air may enter the first chamber 112 through the first train pipe air inlet 111, and a part may enter the auxiliary air cylinder inflation valve 300. The pressure of the first chamber 112 rises, overcoming the force of the limiting spring 180, and pushing the limiting valve body 120 to compress the limiting spring 180, so that a limiting gluey valve is separated from the control cylinder inflation valve body 130, and the BP pressure air may enter the second chamber 115 through the first gap and the second hole, the pressure air in the second chamber 115 may respectively flow to the control air cylinder 200 and the auxiliary air cylinder inflation valve 300 through the first passage 500 and the second passage 600.

The pressure air in the second chamber 115 enters the control air cylinder 200 after passing through the shrinkage plug 220, the pressure rising speed of the control air cylinder 200 may be controlled by the shrinkage plug 220 and the size of the second hole, and the shrinkage plug 220 and the size of second hole may be adjusted according to actual needs.

The pressure air in the second chamber 115 enters auxiliary air cylinder inflation valve 300, prompting the internal mechanism of the auxiliary air cylinder inflation valve 300 to start, opening the internal train pipe of the auxiliary air cylinder inflation valve 300 and the passage of the auxiliary air cylinder 400, BP pressure air may enter the passage of the auxiliary air cylinder 400 and start to inflate the auxiliary air cylinder 400. The pressure rising speed of the auxiliary air cylinder 400 may be controlled by the size of the second hole, and the size of the second hole may be adjusted according to actual needs.

### (2). inflation stopping

After the vehicle brake system produces a braking effect, the BP pressure air may quickly enter the second train pipe air inlet 113. At this time, the pressures at two sides of the limiting valve body 120 are the same, the limiting spring 180 may push the limiting valve body 120 so that the first gluey valve 121 is tightly attached to the control cylinder inflation valve body 130, cutting off the communication between the first chamber 112 and the second hole, and at this time, the pressure air in the first chamber 112 may flow only through the first hole to the second hole and enter the second chamber 115.

In a very short time after the BP pressure air quickly enters the second train pipe air inlet 113, the CV pressure air may flow to the third chamber 116 and the auxiliary air cylinder inflation valve 300 respectively.

When the pressure in the third chamber 116 rises and overcomes the spring force of the control cylinder valve spring 190, the cut-off membrane plate 170 may push the flat plate piston 160, the valve rod 140 compresses the control cylinder valve spring 190 to make it tightly attached to the control cylinder inflation valve body 130, cutting off the communication between the second hole and the second chamber 115, and at this time, the BP pressure air is completely cut off.

After the CV pressure air enters the auxiliary air cylinder inflation valve 300, the internal closing mechanism of the auxiliary air cylinder inflation valve 300 is activated to cut off the internal inflation passage.

The auxiliary air cylinder inflation system 10 provided in the present embodiment may at least have the following advantages:
the control air cylinder 200 and the auxiliary air cylinder inflation valve 300 may be arranged in parallel, the control air cylinder inflation valve 100 can simultaneously inflate the control air cylinder 200 and auxiliary air cylinder inflation valve 300 through the first passage 500 and the second passage 600; the auxiliary air cylinder inflation valve 300 may inflate the auxiliary air cylinder 400, the inflation of the auxiliary air cylinder 400 and the control air cylinder 200 may be carried out separately and independently, which is not restricted by the inflation time of control air cylinder 200.

The limiting valve body 120 may be provided with a first hole, the control cylinder inflation valve body 130 may be provided with a second hole, the adjustment of the pressure air speed of the train pipe can be achieved by limiting valve body 120 approaching or moving away from the control cylinder inflation valve body 130.

The embodiment of the present invention also provides an air brake system for an express freight train, the air brake system for an express freight train may comprise an auxiliary air cylinder inflation system 10. The air brake system for an express freight train may also comprise an auxiliary air cylinder 400, and the auxiliary air cylinder inflation valve 300 and the auxiliary air cylinder 400 may be communicated with each other, which can improve the problem that the inflation of the auxiliary air cylinder 400 is subject to the inflation of control air cylinder 200.

### Industrial Applicability

The present invention discloses an auxiliary air cylinder inflation system and an air brake system for an express freight train. The auxiliary air cylinder inflation system comprises a control air cylinder inflation valve, a control air cylinder, an auxiliary air cylinder inflation valve, a first passage and a second passage; the control air cylinder inflation valve is provided with a train pipe air outlet, and the control air cylinder is provided with a first train pipe inflation port, and the auxiliary air cylinder inflation valve is provided with a second train pipe inflation port; and the first passage communicates with the train pipe air outlet and the first train pipe inflation port, and the second passage communicates with the train pipe air outlet and the second train pipe inflation port; and the first passage is connected in parallel with the second passage. The air brake system for an express freight train comprises an auxiliary air cylinder inflation system. The control air cylinder and the auxiliary air cylinder inflation valve can be simultaneously inflated through the first passage and the second passage, the auxiliary air cylinder inflation valve inflates the auxiliary air cylinder, and the auxiliary air cylinder inflation valve and the control air cylinder are separately and independently inflated, which is not restricted by the control air cylinder inflation.

In addition, it can be understood that the auxiliary air cylinder inflation system and the air brake system for an express freight train of the present invention may be reproducible and may be applied to a variety of industrial applications. For example, the auxiliary air cylinder inflation system of the present invention may be applied to any air brake system.

## Claims

1. An auxiliary air cylinder inflation system (10), comprising:
a control air cylinder inflation valve (100), a control air cylinder (200), an auxiliary air cylinder inflation valve (300), a first passage (500) and a second passage (600),
**characterised in that**
the control air cylinder inflation valve (100) is provided with a train pipe air outlet (114), the control air cylinder (200) is provided with a first train pipe inflation port (210), and the auxiliary air cylinder inflation valve (300) is provided with a second train pipe inflation port (310); and
the first passage (500) communicates with the train pipe air outlet (114) and the first train pipe inflation port (210), the second passage (600) communicates with the train pipe air outlet (114) and the second train pipe inflation port (310); and the first passage (500) is connected in parallel with the second passage (600).

2. The auxiliary air cylinder inflation system (10) according to claim 1, wherein the auxiliary air cylinder inflation system further comprises a shrinkage plug (220), and the shrinkage plug (220) is arranged on the first passage (500).

3. The auxiliary air cylinder inflation system (10) according to claim 1 or 2, wherein
the control air cylinder inflation valve (100) comprises a valve seat (110), a limiting valve body (120) and a control cylinder inflation valve body (130), both the limiting valve body (120) and the control cylinder inflation valve body (130) are arranged in the valve seat (110), and the limiting valve body (120) is configured to be movable relative to the control cylinder inflation valve body (130); the valve seat (110) is provided with a first train pipe air inlet (111) and the train pipe air outlet (114); the limiting valve body (120) is provided with a first hole communicating with the first train pipe air inlet (111), the control cylinder inflation valve body (130) is provided with a second hole communicating with the train pipe air outlet (114); the first hole is always in communication with the second hole, wherein a ventilation section of the first hole is smaller than a ventilation section of the second hole, and
the limiting valve body (120) is configured to be attached to the control cylinder inflation valve body (130) when moving to a first preset position relative to the control cylinder inflation valve body (130), so as to block the first train pipe air inlet (111) and the second hole; or the limiting valve body (120) is configured to enable a first gap to be formed between the limiting valve body and the control cylinder inflation valve body (130) when moving to a second preset position relative to the control cylinder inflation valve body (130), wherein the first gap is configured to communicate with the first train pipe air inlet (111) and the second hole.

4. The auxiliary air cylinder inflation system (10) according to claim 3, wherein one side of the limiting valve body (120) close to the control cylinder inflation valve body (130) is provided with a first gluey valve (121), and the first gluey valve (121) is configured to be attached to the control cylinder inflation valve body (130).

5. The auxiliary air cylinder inflation system (10) according to claim 3 or 4, wherein
the auxiliary air cylinder inflation system further comprises a limiting spring (180), the limiting spring (180) is arranged between the valve seat (110) and the limiting valve body (120), and the limiting spring (180) is configured to make the limiting valve body (120) have a movement tendency of moving to the first preset position; and
the first train pipe air inlet (111) is configured to make the limiting valve body (120) have, after inflating, a movement tendency of moving to the second present position.

6. The auxiliary air cylinder inflation system (10) according to claim 5, wherein the valve seat (110) is further provided with a second train pipe air inlet (113); the second train pipe air inlet (113) and the first train pipe air inlet (111) are located at two opposite ends of the limiting valve body (120), and the second train pipe air inlet (113) is configured to enable, after inflating, the limiting spring (180) to push the limiting valve body (120) to move to the first preset position.

7. The auxiliary air cylinder inflation system (10) according to any one of claims 3-6, wherein the auxiliary air cylinder inflation system further comprises a valve rod (140) movably arranged in the valve seat (110), and the valve rod (140) and the limiting valve body (120) are arranged at two opposite sides of the control cylinder inflation valve body (130); the valve rod (140) is configured to be attached to the control cylinder inflation valve body (130) when moving to a third preset position, so as to block the second hole and the train pipe air outlet (114), or the valve rod (140) is configured to enable a second gap to be formed between the valve rod and the control cylinder inflation valve body (130) when moving to a fourth preset position, wherein the second gap is configured to communicate with the second hole and the train pipe air outlet (114).

8. The auxiliary air cylinder inflation system (10) according to claim 7, wherein one side of the valve rod (140) close to the control cylinder inflation valve body (130) is provided with a second gluey valve (141), and the second gluey valve (141) is configured to be attached to the control cylinder inflation valve body (130).

9. The auxiliary air cylinder inflation system (10) according to claim 7 or 8, wherein the auxiliary air cylinder inflation system further comprises a control cylinder valve spring (190), the control cylinder valve spring (190) is arranged between the control cylinder inflation valve body (130) and the valve rod (140), and the control cylinder valve spring (190) is configured to make the valve rod (140) have a movement tendency of moving to the fourth preset position.

10. The auxiliary air cylinder inflation system (10) according to claim 9, wherein the valve seat (110) is provided with a pre-controlled pressure inlet, and the pre-controlled pressure inlet is configured to make the valve rod (140) have, after inflating, a movement tendency of moving to the third preset position.

11. The auxiliary air cylinder inflation system (10) according to any one of claims 7-10, wherein the auxiliary air cylinder inflation system further comprises a control cylinder inflation valve cover (150), a flat plate piston (160) and a cut-off membrane plate (170), and the valve rod (140) simultaneously penetrates through the control cylinder inflation valve cover (150) and the flat plate piston (160).

12. The auxiliary air cylinder inflation system (10) according to any one of claims 7-11, wherein two ends of the second hole respectively face the limiting valve body (120) and the control cylinder inflation valve body (130), and one end of the second hole facing the control cylinder inflation valve body (130) is arranged as a bell mouth.

13. An air brake system for an express freight train, wherein the air brake system for an express freight train comprises the auxiliary air cylinder inflation system (10) according to any one of claims 1 to 12.

## Patentansprüche

1. Hilfsluftzylinderfüllsystem (10), umfassend:
ein Steuerluftzylinderfüllventil (100), einen Steuerluftzylinder (200), ein Hilfsluftzylinderfüllventil (300), einen ersten Durchgang (500) und einen zweiten Durchgang (600),
**dadurch gekennzeichnet, dass**
das Steuerluftzylinderfüllventil (100) mit einem Zugleitungsluftauslass (114) versehen ist, der Steuerluftzylinder (200) mit einer ersten Zugleitungsfüllöffnung (210) versehen ist, und das Hilfsluftzylinderfüllventil (300) mit einer zweiten Zugleitungsfüllöffnung (310) versehen ist; und
der erste Durchgang (500) mit dem Zugleitungsluftauslass (114) und der ersten Zugleitungsfüllöffnung (210) in Verbindung steht, der zweite Durchgang (600) mit dem Zugleitungsluftauslass (114) und der zweiten Zugleitungsfüllöffnung (310) in Verbindung steht; und der erste Durchgang (500) parallel mit dem zweiten Durchgang (600) verbunden ist.

2. Hilfsluftzylinderfüllsystem (10) nach Anspruch 1, wobei das Hilfsluftzylinderfüllsystem ferner einen Schrumpfstopfen (220) umfasst und der Schrumpfstopfen (220) an dem ersten Durchgang (500) angeordnet ist.

3. Hilfsluftzylinderfüllsystem (10) nach Anspruch 1 oder 2, wobei
das Steuerluftzylinderfüllventil (100) einen Ventilsitz (110), einen Begrenzungsventilkörper (120) und einen Steuerzylinderfüllventilkörper (130) umfasst, wobei sowohl der Begrenzungsventilkörper (120) als auch der Steuerzylinderfüllventilkörper (130) in dem Ventilsitz (110) angeordnet sind und der Begrenzungsventilkörper (120) so gestaltet ist, dass er relativ zu dem Steuerzylinderfüllventilkörper (130) beweglich ist; der Ventilsitz (110) mit einem ersten Zugleitungslufteinlass (111) und dem Zugleitungsluftauslass (114) versehen ist; der Begrenzungsventilkörper (120) mit einer ersten Öffnung versehen ist, die mit dem ersten Zugleitungslufteinlass (111) in Verbindung steht, der Steuerzylinderfüllventilkörper (130) mit einer zweiten Öffnung versehen ist, die mit dem Zugleitungsluftauslass (114) in Verbindung steht; die erste Öffnung immer mit der zweiten Öffnung in Verbindung steht, wobei ein Luftwechselabschnitt der ersten Öffnung kleiner ist als ein Luftwechselabschnitt der zweiten Öffnung; und
der Begrenzungsventilkörper (120) so gestaltet ist, dass er an den Steuerzylinderfüllventilkörper (130) angefügt wird, wenn er sich eine erste voreingestellte Position relativ zu dem Steuerzylinderfüllventilkörper (130) bewegt, um den Zugleitungslufteinlass (111) und die zweite Öffnung zu sperren; oder der Begrenzungsventilkörper (120) so gestaltet ist, dass ein erster Spalt zwischen dem Begrenzungsventilkörper und dem Steuerzylinderfüllventilkörper (130) gebildet werden kann, wenn er sich in eine zweite voreingestellte Position relativ zu dem Steuerzylinderfüllventilkörper (130) bewegt, wobei der erste Spalt so gestaltet ist, dass er mit dem Zugleitungslufteinlass (111) und der zweiten Öffnung in Verbindung steht.

4. Hilfsluftzylinderfüllsystem (10) nach Anspruch 3, wobei eine Seite des Begrenzungsventilkörpers (120) in der Nähe des Steuerzylinderfüllventilkörpers (130) mit einem ersten Klebeventil (121) versehen ist und das erste Klebeventil (121) so gestaltet ist, dass es an den Steuerzylinderfüllventilkörper (130) angefügt werden kann.

5. Hilfsluftzylinderfüllsystem (10) nach Anspruch 3 oder 4, wobei
das Hilfsluftzylinderfüllsystem ferner eine Begrenzungsfeder (180) umfasst, wobei die Begrenzungsfeder (180) zwischen dem Ventilsitz (110) und dem Begrenzungsventilkörper (120) angeordnet ist und die Begrenzungsfeder (180) so gestaltet ist, dass der Begrenzungsventilkörper (120) eine Bewegungstendenz erhält, sich in die erste voreingestellte Position zu bewegen; und
der Zugleitungslufteinlass (111) so gestaltet ist, dass der Begrenzungsventilkörper (120) nach dem Füllen eine Bewegungstendenz erhält, sich in die zweite voreingestellte Position zu bewegen.

6. Hilfsluftzylinderfüllsystem (10) nach Anspruch 5, wobei der Ventilsitz (110) ferner mit einem zweiten Zugleitungslufteinlass (113) versehen ist; der zweite Zugleitungslufteinlass (113) und der erste Zugleitungslufteinlass (111) an zwei entgegengesetzten Enden des Begrenzungsventilkörpers (120) angeordnet sind, und der zweite Zugleitungslufteinlass (113) so gestaltet ist, dass er es der Begrenzungsfeder (180) nach dem Füllen ermöglicht, den Begrenzungsventilkörper (120) in die erste voreingestellte Position zu bewegen.

7. Hilfsluftzylinderfüllsystem (10) nach einem der Ansprüche 3 bis 6, wobei das Hilfsluftzylinderfüllsystem ferner eine Ventilstange (140) umfasst, die beweglich in dem Ventilsitz (110) angeordnet ist, und die Ventilstange (140) und der Begrenzungsventilkörper (120) an zwei entgegengesetzten Seiten des Steuerzylinderfüllventilkörpers (130) angeordnet sind; die Ventilstange (140) so gestaltet ist, dass sie an den Steuerzylinderfüllventilkörper (130) angefügt wird, wenn sie sich in eine dritte voreingestellte Position bewegt, um so die zweite Öffnung und den Zugleitungsluftauslass (114) zu sperren, oder die Ventilstange (140) so gestaltet ist, dass ein zweiter Spalt zwischen der Ventilstange und dem Steuerzylinderfüllventilkörper (130) gebildet werden kann, wenn sie sich in eine vierte voreingestellte Position bewegt, wobei der zweite Spalt so gestaltet ist, dass er mit der zweiten Öffnung und dem Zugleitungsluftauslass (114) in Verbindung steht.

8. Hilfsluftzylinderfüllsystem (10) nach Anspruch 7, wobei eine Seite der Ventilstange (140) in der Nähe des Steuerzylinderfüllventilkörpers (130) mit einem zweiten Klebeventil (141) versehen ist und das zweite Klebeventil (141) so gestaltet ist, dass es an den Steuerzylinderfüllventilkörper (130) angefügt werden kann.

9. Hilfsluftzylinderfüllsystem (10) nach Anspruch 7 oder 8, wobei das Hilfsluftzylinderfüllsystem ferner eine Steuerzylinderventilfeder (190) umfasst, wobei die Steuerzylinderventilfeder (190) zwischen dem Steuerzylinderfüllventilkörper (130) und der Ventilstange (140) angeordnet ist, und wobei die Steuerzylinderventilfeder (190) so gestaltet ist, dass die Ventilstange (140) eine Bewegungstendenz erhält, sich in die vierte voreingestellte Position zu bewegen.

10. Hilfsluftzylinderfüllsystem (10) nach Anspruch 9, wobei der Ventilsitz (110) mit einem vorgesteuerten Druckeinlass versehen ist und der vorgesteuerte Druckeinlass so gestaltet ist, dass die Ventilstange (140) nach dem Füllen eine Bewegungstendenz erhält, sich in die dritte voreingestellte Position zu bewegen.

11. Hilfsluftzylinderfüllsystem (10) nach einem der Ansprüche 7-10, wobei das Hilfsluftzylinderfüllsystem ferner eine Steuerzylinderfüllventil-Abdeckung (150), einen Flachplattenkolben (160) und eine Trennmembranplatte (170) umfasst, und die Ventilstange (140) gleichzeitig durch die Steuerzylinderfüllventilabdeckung (150) und den Flachplattenkolben (160) hindurchgeht.

12. Hilfsluftzylinderfüllsystem (10) nach einem der Ansprüche 7 bis 11, wobei zwei Enden der zweiten Öffnung dem Begrenzungsventilkörper (120) bzw. dem Steuerzylinderfüllventilkörper (130) zugewandt sind und ein Ende der zweiten Öffnung, das dem Steuerzylinderfüllventilkörper (130) zugewandt ist, als Glockenmündung ausgebildet ist.

13. Luftbremssystem für einen Expressfrachtzug, **dadurch gekennzeichnet, dass** das Luftbremssystem für einen Expressfrachtzug das Hilfsluftzylinderfüllsystems (10) nach einem der Ansprüche 1 bis 12 umfasst.

## Revendications

1. Système de gonflage de cylindre pneumatique auxiliaire (10), comprenant :
une valve de gonflage de cylindre pneumatique de commande (100), un cylindre pneumatique de commande (200), une valve de gonflage de cylindre pneumatique auxiliaire (300), un premier passage (500) et un deuxième passage (600),
**caractérisé en ce que**
la valve de gonflage de cylindre pneumatique de commande (100) est dotée d'une sortie d'air de conduite de train (114), le cylindre pneumatique de commande (200) est doté d'un premier orifice de gonflage de conduite de train (210), et la valve de gonflage de cylindre pneumatique auxiliaire (300) est dotée d'un deuxième orifice de gonflage de conduite de train (310) ; et
le premier passage (500) communique avec la sortie d'air de conduite de train (114) et le premier orifice de gonflage de conduite de train (210), le deuxième passage (600) communique avec la sortie d'air de conduite de train (114) et le deuxième orifice de gonflage de conduite de train (310) ; et le premier passage (500) est raccordé en parallèle au deuxième passage (600).

2. Système de gonflage de cylindre pneumatique auxiliaire (10) selon la revendication 1, dans lequel le système de gonflage de cylindre pneumatique comprend en outre un bouchon rétractable (220), et le bouchon rétractable (220) est agencé sur le premier passage (500).

3. Système de gonflage de cylindre pneumatique auxiliaire (10) selon la revendication 1 ou 2, dans lequel la valve de gonflage de cylindre pneumatique de commande (100) comprend un siège de valve (110), un corps de limiteur (120) et un corps de valve de gonflage de cylindre de commande (130), le corps de limiteur (120) et le corps de valve de gonflage de cylindre de commande (130) sont tous deux agencés dans le siège de valve (110), et le corps de limiteur (120) est configuré pour pouvoir se déplacer par rapport au corps de valve de gonflage de cylindre de commande (130) ; le siège de valve (110) est doté d'une première entrée d'air de conduite de train (111) et de la sortie d'air de conduite de train (114) ; le corps de limiteur (120) est doté d'un premier trou communiquant avec la première entrée d'air de conduite de train (111), le corps de valve de gonflage de cylindre de commande (130) est doté d'un deuxième trou communiquant avec la sortie d'air de conduite de train (114) ; le premier trou est toujours en communication avec le deuxième trou, dans lequel une section de ventilation du premier trou est plus petite qu'une section de ventilation du deuxième trou ; et
le corps de limiteur (120) est configuré pour être fixé au corps de valve de gonflage de cylindre de commande (130) lorsqu'il se déplace à partir d'une première position prédéfinie par rapport au corps de valve de gonflage de cylindre de commande (130), de façon à bloquer la première entrée d'air de conduite de train (111) et le deuxième trou ; ou le corps de limiteur (120) est configuré pour permettre la formation d'un premier espace entre le corps de limiteur et le corps de valve de gonflage de cylindre de commande (130) lorsqu'il se déplace vers une deuxième position prédéfinie par rapport au corps de valve de gonflage de cylindre de commande (130), dans lequel le premier espace est configuré pour communiquer avec la première entrée d'air de conduite d'air (111) et le deuxième trou.

4. Système de gonflage de cylindre pneumatique auxiliaire (10) selon la revendication 3, dans lequel un côté du corps de limiteur (120) proche du corps de valve de gonflage de cylindre de commande (130) est doté d'une première valve collante (121), et la première valve collante (121) est configurée pour être fixée au corps de valve de gonflage de cylindre de commande (130).

5. Système de gonflage de cylindre pneumatique auxiliaire (10) selon la revendication 3 ou 4, dans lequel le système de gonflage de cylindre pneumatique auxiliaire comprend en outre un ressort de limitation (180), le ressort de limitation (180) est agencé entre le siège de valve (110) et le corps de limiteur (120), et le ressort de limitation (180) est configuré pour amener le corps de limiteur (120) à avoir tendance à se déplacer vers la première position prédéfinie ; et
la première entrée d'air de conduite de train (111) est configurée pour amener le corps de limiteur (120), après le gonflage, à avoir tendance à se déplacer vers la deuxième position prédéfinie.

6. Système de gonflage de cylindre pneumatique auxiliaire (10) selon la revendication 5, dans lequel le siège de valve (110) est en outre doté d'une deuxième entrée d'air de conduite de train (113) ; la deuxième entrée d'air de conduite de train (113) et la première entrée d'air de conduite de train (111) sont situées à deux extrémités opposées du corps de limiteur (120), et la deuxième entrée d'air de conduite de train (113) est configurée pour permettre, après le gonflage, au ressort de limitation (180) de pousser le corps de limiteur (120) afin qu'il se déplace vers la première position prédéfinie.

7. Système de gonflage de cylindre pneumatique auxiliaire (10) selon l'une quelconque des revendications 3 à 6, dans lequel le système de gonflage de cylindre pneumatique auxiliaire comprend en outre une tige de valve (140) agencée de manière mobile dans le siège de valve (110), et la tige de valve (140) et le corps de limiteur (120) sont agencés sur deux côtés opposés du corps de valve de gonflage de cylindre de commande (130) ; la tige de valve (140) est configurée pour être fixée au corps de valve de gonflage de cylindre de commande (130) lorsqu'elle se déplace vers une troisième position prédéfinie, de façon à bloquer le deuxième trou et la sortie d'air de conduite de train (114), ou la tige de valve (140) est configurée pour permettre la formation d'un deuxième espace entre la tige de valve et le corps de valve de gonflage de cylindre de commande (130) lorsqu'elle se déplace vers une quatrième position prédéfinie, dans lequel le deuxième espace est configuré pour communiquer avec le deuxième trou et la sortie d'air de conduite de train (114).

8. Système de gonflage de cylindre pneumatique auxiliaire (10) selon la revendication 7, dans lequel un côté de la tige de valve (140) proche du corps de valve de gonflage de cylindre de commande (130) est doté d'une deuxième valve collante (141), et la deuxième valve collante (141) est configurée pour être fixée au corps de valve de gonflage de cylindre de commande (130).

9. Système de gonflage de cylindre pneumatique auxiliaire (10) selon la revendication 7 ou 8, dans lequel le système de gonflage de cylindre pneumatique auxiliaire comprend en outre un ressort de valve de cylindre de commande (190), le ressort de valve de cylindre de commande (190) est agencé entre le corps de valve de gonflage de cylindre de commande (130) et la tige de valve (140), et le ressort de valve de cylindre de commande (190) est configuré pour amener la tige de valve (140) à avoir tendance à se déplacer vers la quatrième position prédéfinie.

10. Système de gonflage de cylindre pneumatique auxiliaire (10) selon la revendication 9, dans lequel le siège de valve (110) est doté d'une entrée de pression précommandée, et l'entrée de pression précommandée est configurée pour amener la tige de valve (140), après le gonflage, à avoir tendance à se déplacer vers la troisième position prédéfinie.

11. Système de gonflage de cylindre pneumatique auxiliaire (10) selon l'une quelconque des revendications 7 à 10, dans lequel le système de gonflage de cylindre pneumatique auxiliaire comprend en outre un couvercle de valve de gonflage de cylindre de commande (150), un piston à plaque plate (160) et une plaque à membrane de coupure (170), et la tige de valve (140) pénètre simultanément à travers le couvercle de valve de gonflage de cylindre de commande (150) et le piston à plaque plate (160).

12. Système de gonflage de cylindre pneumatique auxiliaire (10) selon l'une quelconque des revendications 7 à 11, dans lequel deux extrémités du deuxième trou font respectivement face au corps de limiteur (120) et au corps de valve de gonflage de cylindre de commande (130), et une extrémité du deuxième trou faisant face au corps de valve de gonflage de cylindre de commande (130) est agencée sous la forme d'un pavillon.

13. Système de frein à air pour un train d'envoi par messageries, dans lequel le système de frein à air comprend le système de gonflage de cylindre pneumatique auxiliaire (10) selon l'une quelconque des revendications 1 à 12.
